# EUROPÄISCHE PATENTANMELDUNG

(11) **EP 1 035 324 A1**
(43) Veröffentlichungstag der Anmeldung: **13.09.2000**
(21) Anmeldenummer: 99250418.3
(22) Anmeldetag: 29.11.1999
(51) Int. Cl.: F03D 3/00, F03D 3/06

(54) **Windturbine mit senkrechter Drehachse**

(71) Anmelder: Gonçalves Cambra, Antonio, 53173 Bonn (DE)
(72) Erfinder: Gonçalves Cambra, Antonio, 53173 Bonn (DE)

(57) **Zusammenfassung**

Das Erfindungsprinzip ist einem **Klappdeckel** eines Briefkastens (Abb.1) ähnlich: wenn eine Flüssigkeit bläst ("Kf", Abb.2/3), können die **Scheidewände** ((21):(21a)= an dem **Gestell** (23) angelehnt (Abb.2a),(21b)= getrieben (Abb.2b)) von jeder des **"Klappdeckel"** K1, K2, K3 und K4, je drehend um ein **Gelenk** (22), in verschiedenen Augenblicke stehen.

Diese **"Radantriebe"** können mit **Generatoren** gekoppelt werden und zwar in der Oberfläche oder unter Wasser funktionieren. Sogar **in einem Boot**, wo der Strom an einen **Elektromotor** übertragen wird.

## Beschreibung

### 1. EINLEITUNG

Man hat immer versucht von den natürlichen Kräften (Wind und Laufwasser) Energie zu gewinnen: aber bisher liegen die besten gefundenen Lösungen (**Propeller** für Windkraft und **Turbinen** für Laufwasser) weit entfernt von dem gewünschten Ergebnis, überhaupt von einem fundamentalen Grund: die **Richtung der Flüssigkeitsbewegung** (Wind oder Laufwasser) prallt senkrecht gegen die Bewegungsrichtung vom Kraftbehälter der Energieumwandlungsantriebe (Propeller oder Turbine).

Das bedeutet, daß die meiste der kinetischen Energie (durch die bewegende Flüssigkeit gequert) durch zerstreute Wärme und wichtige mechanische Sachschäden verloren geht. So fordern die Mechanismen eine Verstärkung in die Herstellung, eine regelmässige Wartung und Reparatur, eine teueres Umtauschen von beschädigten Bestandteilen. Manchmal gehen die Propeller unter starkem Wind kaputt und stürzen.

Folgend kommt (2.Teil Beschreibungs) **Das Erfindungsprinzip** (S.4/6) und danach (3.Teil) **Der Anwendungsbereich** (S.7).

Die **Ansprüche** stehen in den S.8/10.

Die **Zeichnungen** sind auf den S.11/12 gezogen.

### 2. ERFINDUNGSPRINZIP

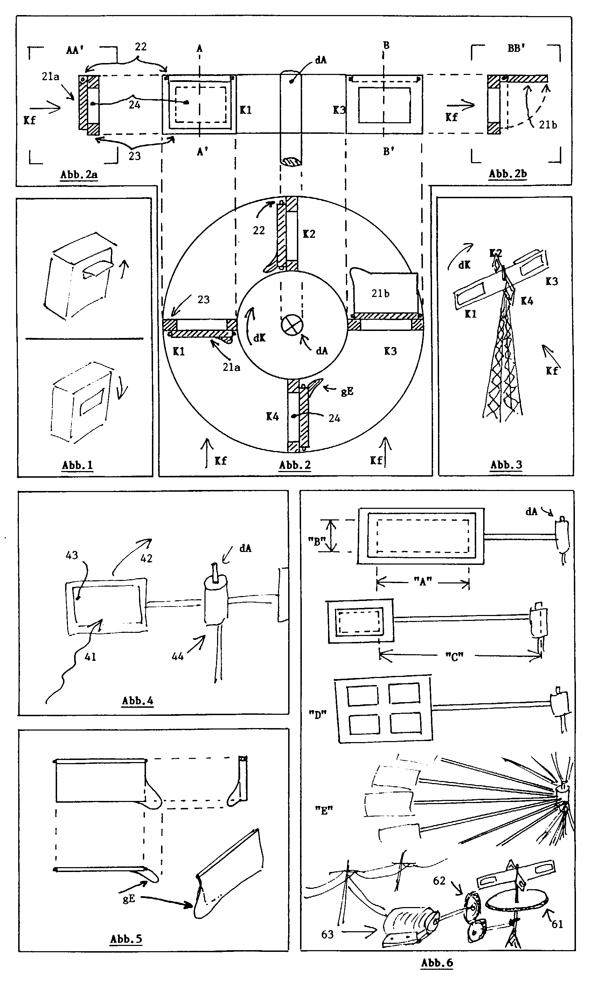

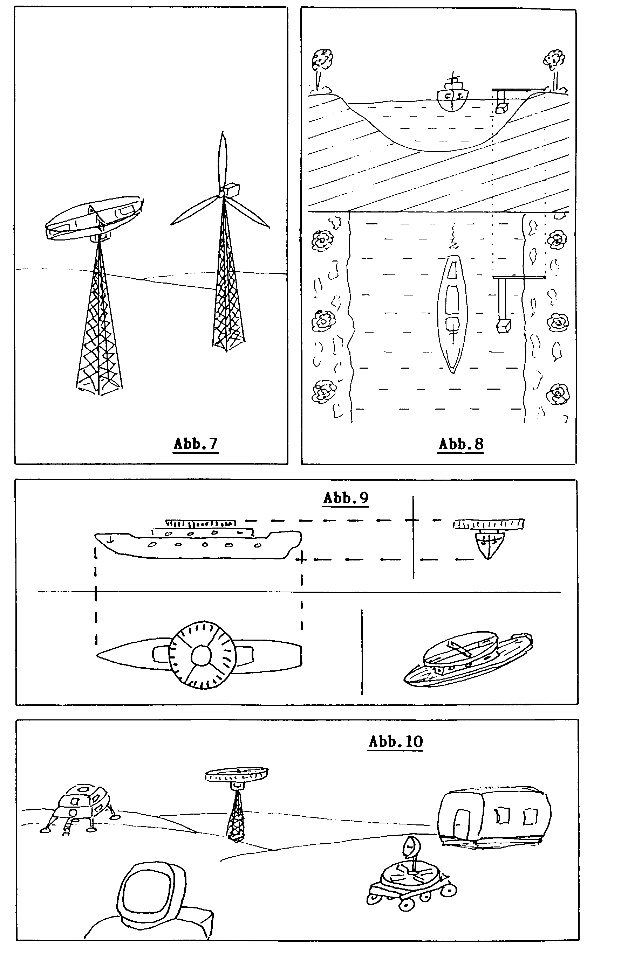

**2.0** Verteilung der Erklärung: **2.1:** Zusammensetzung der "**Klappdeckel**" (Scheidewand, Gelenk, Gestell und Gestellöffnung), "**Radantrieb**" und **Verfahrenslaufen**; **2.2**: Die **Gestalt der Scheidewand**; **2.3**: Einige **Parameter** für ein gutes Verfahrenslaufen; **2.4**: Die eventuelle Benutzung von einem **Schwungrad**; **2.5**: Die größten **Vorteile** gegenüber anderen Verfahren.
**2.1** (Abb.4) Die erfolgreichste Energiegewinnung kann man also erlangen, wenn die **Richtung der Flüssigkeitsbewegung** (41) dieselbe wie die Bewegungsrichtung (42) vom Kraftbehälter (43) des Energieumwandlungsantriebes (44) ist.
   Es scheint, daß die beste Lösung einem "**Klappdeckel**" wie zB eines Briefkastens (Abb.1) ähnlich ist:
   (Abb.2) Wenn eine Flüssigkeit bläst ("Kf", Wind oder Laufwasser zB), dann kann (Abb.2a/2b) die **Scheidewand** ((21); (21a)= an dem **Gestell** (23) angelehnt, (21b)= getrieben) von jedem von den **Zusammensetzungen** K1, K2, K3 und K4, je drehend um ein **Gelenk** (22), in verschiedenen Augenblicken stehen:
      **2.1.1. K1-Augenblick**: (Abb.2a) Die **Scheidewand** vom K1 ist an dem **Gestell** (23) angelehnt (21a), verhindert die Flüssigkeit durch die **Gestellöffnung** (24) zu queren und treibt den K1 vorwärts (Abb.2);
      **2.1.2. K3-Augenblick**: (Abb.2b) Die **Scheidewand** vom K3 wird von der Flüssigkeit (die durch die **Gestellöffnung** (24) gequert wird) getrieben (21b) und so bietet K3 ein geringer Widerstand als K1 an (Abb.2);
      **2.1.3. Wenn K1, K2, K3 und K4** (Abb.2/3) regelmässig in einem **Rad** aufgestellt sind ("**Radantrieb**"), dann kann die Zusammenstellung um eine Achse (dA= **drehend Achse**) drehen: je größer die Differenz zwischen den Kräften von K1 und K3, desto größer die **drehende Kraft** (dK).
**2.2** Wenn man die **untere und innere Ecke** der Scheidewand ein wenig biegt (Abb.5), geschieht folgendes (Abb.2):
   ( In der Nähe von den K2- und K4-Augenblick ist die Energiegewinnung kaum bemerkbar ("tote" Augenblicke). )
   ( Der "gebogenen Ecke" ("gE") ist in K1 und K3 (Abb.2a/b) nicht gezeigt, die Prinzipserklärung zu vereinfachen. )

   **2.2.1. Um den K2-Augenblick**: der **gebogenen Ecke** ("gE", K2) kann beginnen noch vor diesem Augenblick die **Scheidewand** (21a) zu öffnen -- so daß nach dem K2-Augenblick sie (21a) schon ganz geöffnet ist, und erlaubt wegen des geringeren Widerstands eine höhere Energiegewinnung zu erlangen.
   **2.2.2. Um den K4-Augenblick**: der **gebogenen Ecke** ("gE", K4) kann beginnen noch vor diesem Augenblick die **Scheidewand** (21b) zu schließen -- so daß nach dem K2-Augenblick sie (21b) schon ganz geschloßen ist, und erlaubt wegen des stärkeren Widerstands eine höhere Energiegewinnung zu erlangen.
**2.3** Die Energiegewinnung ist eine Funktion von einigen **Parameter**, im besonderen (Abb.6):
   **2.3.1.** Die Größe von der wirksamen **Scheidewandsfläche** "AxB" -- je größer die Fläche desto mehr Ergebnis;
   **2.3.2.** Im geraden **Verhältnis** "A:B", wenn "B" sehr groß ist, dauert es zu lange für die Scheidewand (21a/b) zu öffnen und zu schließen;
   **2.3.3.** Der **Abstand** ("C") der drehenden Achse (dA) bis zur Scheidewand (21); binnen bestimmter Grenzen je größer der Abstand desto besser die Energiegewinnung;
   **2.3.4.** Die **Zahl von Scheidewänden in einem gemeinsamen Gestell** ("D") in den größten Anlagen;
   **2.3.5.** Die **Zahl von Zusammensetzungen K1**, **K2**,...,**Kn**, ("E"): im Prinzip, je größer der Abstand "C" desto größer der Wert "n" (von "Kn");
   **2.3.6.** Die **Rotationshäufigkeit**: Bis an die Grenzen von verwüstenden Stürmen, je höher die Flüssigkeitsgeschwindigkeit desto mehr Ergebnis. (Die Zahl von Umdrehungen (per Minute zB) ist, für jedes "Radantrieb"-Modell durch jede bestimmte Flüssigkeitsgeschwindigkeit, nach der **Triebwerksart** ((62), zwischen der Anlage und dem **Generator** (63)) und nach den selbst Generator bedingt);
**2.4** Es wird empfohlen die Benutzung (besonders bei "**Windradantrieb")** eines **Schwungrades**, als ein mechanischer Energiespeicher, der die Umdrehungsgeschwindigkeit vereinheitlichen soll (61/Abb.6).
**2.5 Die größen Vorteile** gegenüber der klassischen Wasserturbine und dem modernen Windpropeller ist, daß (erstens) **für den "Radantrieb**" **es gilt die Flüssigkeitsbewegung von allen Richtungen binnen einer bestimmten Ebene** (Abb.3), während die Turbine und der Propeller funktionieren nur nach der Flüssigkeitsbewegung von einer bestimmten Richtung (Besonders für den Propeller ist es sehr unbequem, kompliziert und energievergeudend immer die wechselhafte Windrichtung zu suchen), und daß (zweitens) **bis an die Grenzen von verwüstenden Stürmen, je höher die Flüssigkeitsgeschwindigkeit desto mehr Ergebnis** -- keine zerstreute Wärme oder mechanische Sachschäden, keine Verstärkung in die Herstellung oder regelmässige Wartung und Reparaturen, kein teueres Umtauschen von beschädigten Bestandteilen, kein Kaputtgehen und Stürzen unter starkem Wind.

### 3. ANWENDUNGSBEREICH

Diese neue Verfahren kann für viele und vielfältige Anwendungen benutzen werden, darunter:
**3.1.** Man kann statt des **Dreiflügelpropellers** (oder anderen ähnlichen) in den heutigen **Windkraftanlagen** einen "Radantrieb" (Abb.7) benutzen und so eine mindestens doppelte Erzeugung erlangen.
**3.2.** Betreffend der **Flüsse** ist der "Radantrieb" (Abb.8) umwelttechnisch wesentlich **wirkungsvoller** und für die Vegetation, Tierwelt, Bewölkerung, Schiffsverkher, etc., **verträglicher** als die Energiegewinnung durch Laufwasserwerk und Staudämme. Sogar **Brücken** können gebaut oder umgebaut werden; sie können auch kleine nicht belanglose Kraftwerke bedienen.
**3.3.** Durch dieses Verfahren ist auch die Möglichkeit gegeben, kleine **Segelboote anzutreiben** (Abb.9). Anstelle des Segels wird die Windkraft durch einen "Radantrieb" an einen **Elektromotor** übertragen.
   Dies kann in der Bootsindustrie gravierende Veränderungen bewirken.
**3.4.** Gute Möglichkeiten gibt's auch in den **Strömungen des Meerwassers**, besonders am Seeboden bei den Meerengen (in Messina und Gibraltar zB) wo riesige **Wasserströme** sich bewegen.
**3.5.** Sogar im **Planeten Mars**, wo es immer einen leichten Wind gibt, kann dieses neue Verfahren in Fahrzeugen und Kraftwerken benutzt werden (Abb.10), da auf dem Mars das Sonnenlicht schon zu schwach für die Elektrizitätproduktion durch Solarstromanlagen ist. (Man bereitet Besuche auf dem Mars vor).

## Patentansprüche

1. Vorrichtung für Elektizitätproduktion nach der kinetischen Energie der Flüssigkeiten in Bewegung (des Winds und des Laufwassers zB), bestehend aus einigen "**Klappdeckel**" (zB K1, K2, K3, K4, Abb.2) die die eines Briefkastens ähnlich sind (Abb.1), dadurch gekennzeichnet, daß die erwähnten "Klappdeckel" K1,...,Kn (Abb.2/3) regelmässig in einem **Rad** ("**Radantrieb**") aufgestellt stehen und daß diese Zusammensetzung um eine Achse (dA= "**drehend Achse**") unabhängig von der Richtung der Flüssigkeitsbewegung (binnen einer bestimmten Ebene) dreht.

2. Vorrichtung für Elektizitätproduktion gemäß Anspruch 1, dadurch gekennzeichnet, daß (Abb.2) jeder dieser **Klappdeckel** K1,...,Kn (Abb.2a) an einer **Scheidewand** ((21); (21a)= angelehnt an dem **Gestell** (23), (21b)= getrieben) drehend um ein **Gelenk** (22) besteht, so daß dann eine Flüssigkeit bläst ("Kf" zB, Abb.2/2a) denn K1 ist vor der in dem **Gestell** (23) angelehnten **Scheidewand** (21a) gestoßen und das (Abb.2) treibt K1 vorwärts, während K3 (Abb.2/2b) hinter die **Gestellöffnung** (24) gestoßen ist, das treibt die **Scheidewand** (21b) vorwärts, erlaubend die Flüssigkeit zu queren, und so bietet K3 einen geringeren Widerstand als K1 -- je größer die Differenz zwischen den Kräften von K1 und K3, desto größer die **drehende Kraft** ("dK", Abb.2/3).

3. Vorrichtung für Elektizitätproduktion gemäß Ansprüche 1/2, dadurch gekennzeichnet, daß (Abb.4) die **Richtung der Flüssigkeitsbewegung** (41) dieselbe wie die Bewegungsrichtung (42) von den Kraftsbehälter (43) des Energieumwandlungsantriebes (44) ist.

4. Vorrichtung für Elektrizitätproduktion gemäß Anspruch 2, dadurch gekennzeichnet, daß in der **Scheidewand** (Abb.5 u. 21a/b(Abb.2)) die **untere und innere Ecke** ein bißchen gebogen ist, die Öffnung und den Verschluß schneller zu machen.

5. Vorrichtung für Elektrizitätproduktion gemäß Anspruch 1/2/3/4, dadurch gekennzeichnet, daß das Ergebnis der Energiegewinnung eine Funktion von einigen **Parameter** ist, im besonderen (Abb.6): **(1.)**: Je größer die wirksame **Scheidewandfläche** ("AxB") desto mehr Ergebnis; **(2.)**: Die Breite "B" kann nicht sehr gross im Verhältnis zu der Länge "A" sein, sonst dauert es zu lange zu öffnen und zu schließen; **(3.)**: Binnen bestimmter Grenzen, je größer der **Abstand** "C" (zwischen der drehenden Achse (dA) und der Scheidewand (21)) desto mehr Ergebnis; **(4.)**: Die **Zahl von Scheidewänden in einem gemeinsamen Gestell** ("D"), in den größten Anlagen; **(5.)**: Die **Zahl von Zusammensetzungen K1**, **K2**,..., **Kn** ("E"): in Prinzip, je größer der Abstand "C" desto größer der Wert "n" (von "Kn"); **(6.)**: Die **Rotationshäufigkeit**: Bis an die Grenzen von verwüstenden Stürmen, je höher die Flüssigkeitsgeschwindigkeit desto mehr Ergebnis.

6. Vorrichtung für Elektrizitätproduktion gemäß Anspruch 1/2/3/4/5, dadurch gekennzeichnet, daß ein "**Radantrieb**" (Abb.3) kann eventuell ein **Schwungrad** (61/Abb.6) als einen mechanischen Energiespeicher benutzen, der die **Umdrehungsgeschwindigkeit** vereinheitlichen soll.

7. Vorrichtung für Elektrizitätproduktion gemäß Ansprüche 1/2/3/4/5/6, dadurch gekennzeichnet, daß ein "**Radantrieb**" (Abb.7) in den heutigen **Windkraftanlagen** statt des **Dreiflügelpropellers** (oder anderen ähnlichen) benutzten werden kann, und so eine mindestens doppelte Erzeugung erlangen.

8. Vorrichtung für Elektrizitätproduktion gemäß Ansprüche 1/2/3/4/5/6, dadurch gekennzeichnet, daß betreffend der Flüsse der "**Radantrieb**" umwelttechnisch wesentlicher **wirkungsvoller** und für die Vegetation, Tierwelt, Bewölkerung, Schiffsverkehr (Abb.8), etc, **verträglicher** ist wie die Energiegewinnung durch Laufwasser und Staudämme. Sogar **Brücken** können gebaut oder umgebaut werden, so sie können auch kleine nicht belanglose **Kraftwerke** bedienen, gleichweise nach den **Strömungen des** **Meerwassers**, besonders am Seeboden bei den Meerengen (als in Messina und Gibraltar zB), wo **riesige Wasserströme** sich bewegen.

9. Vorrichtung für Elektrizitätproduktion gemäß Ansprüche 7, dadurch gekennzeichnet, daß durch dieses Verfahren auch die Möglichkeit gegeben ist, kleine **Segelboote anzutreiben** (Abb.9), da anstelle des Segels die Windkraft durch einen "**Radantrieb**" an einen **Elektromotor** übertragen wird.

10. Vorrichtung für Elektrizitätproduktion gemäß Anspruch 7 u. 9, dadurch gekennzeichnet, daß sogar auf anderen Planeten (**Mars** zB, Abb.10) kann dieses Verfahren auch in Fahrzeugen und Kraftwerken benutztbar werden, da auf dem Mars das Sonnenlicht schon zu schwach für Elektrizitätproduktion durch Solarstromanlagen ist. (Man bereitet Besuche auf dem Mars vor).
